## Europäisches Patentamt
## European Patent Office
## Office européen des brevets

(11) Publication number: **0 127 684**
**B1**

(12) # EUROPEAN PATENT SPECIFICATION

(45) Date of publication of patent specification: **29.08.90**

(51) Int. Cl.⁵: **B 23 Q 15/00, G 05 B 19/405**

(21) Application number: **83903579.7**

(22) Date of filing: **17.11.83**

(86) International application number:
**PCT/JP83/00415**

(87) International publication number:
**WO 84/02100 07.06.84 Gazette 84/14**

(54) **METHOD OF DETERMINING CURRENT POSITION OF A MACHINE.**

(30) Priority: **19.11.82 JP 203434/82**

(43) Date of publication of application:
**12.12.84 Bulletin 84/50**

(45) Publication of the grant of the patent:
**29.08.90 Bulletin 90/35**

(84) Designated Contracting States:
**DE FR GB**

(56) References cited:
**FR-A-2 345 756**
**JP-A-55 155 206**
**US-A-3 584 284**

(73) Proprietor: **FANUC LTD**
**3580, Shibokusa Aza-Komanba Oshino-mura**
**Minamitsuru-gun Yamanashi 401-05 (JP)**

(72) Inventor: **KIYA, Nobuyuki**
**Yokokawacho-Jutaku 13-106, 108 Yokokawa-cho**
**Hachioji-shi Tokyo 193 (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

## Description

This invention relates to a method of discriminating the present position of a machine.

A numerically controlled (hereafter referred to as "NC") machine, for example a machine tool, conventionally has a dog provided on a movable portion of the machine tool and a limit switch provided at a prescribed position on a stationary portion thereof and functions in such a manner that when the dog trips the limit switch, this is taken as indicating that the movable portion of the machine has reached the prescribed position, whereupon a predetermined operation is executed. By way of example, in an operation for returning a movable portion such as a table to a reference point, the dog trips a deceleration limit switch in the vicinity of the reference point, whereupon an NC unit belonging to the machine tool takes this as indicating that the movable portion has reached the vicinity of the reference point and responds by providing a command for reducing the travelling velocity. Further, in a tool change operation, a tool rest is moved toward a tool change position. At the tool change position, a dog provided on the tool rest trips the limit switch, whereby the machine tool halts the tool rest at a stopping position and thereafter performs the tool change.

Thus, in the prior art, a dog and a limit switch are provided at appropriate locations and, when a prescribed limit switch is actuated, a predetermined operation is performed by the NC apparatus or on the machine tool side. This means that a dog and limit switch are essential, thereby increasing the number of component parts. Another disadvantage is that mounting and adjusting the dog and limit switch are troublesome operations.

Accordingly, an object of the present invertion is to provide a novel method of discriminating the present position of a machine, whereby a region at which a movable portion resides can be discriminated without mounting a dog or limit switch.

US—A—3 584 284 discloses a digital position measurement and control system in which a carriage is driven along a rack and its position along the rack is detected by an optical reading system detecting address strips disposed at intervals along a stationary carrier. The address strips provide spaced-apart regions along a controlled coordinate axis of the system, and provide complex digital signals to indicate the position of the carriage.

According to the present invention there is provided a method of providing a signal indicative of the current position of a movable portion of a machine which is controlled by a numerical control system in dependence on the current position of said movable portion, comprising dividing a stroke of said movable portion along a controlled coordinate axis into parts to partition the stroke into n regions, and detecting the current position of said movable portion along said axis in terms of said regions, characterized by:

dividing said stroke such that said regions are equal to one another in length and each is in contact with the next;

assigning consecutive present position region numbers to the successive partitioning regions;

integrating a commanded travelling distance of the movable portion of the machine as it moves along said regions;

when the integrated commanded travelling distance of the movable portion of the machine emerges from one of said regions, incrementing or decrementing the present position region number in dependence upon the travelling direction of the movable portion of the machine, thereby to indicate the next region as being the new present position region of the movable portion of the machine; and

delivering a present position region signal, which is indicative of said present position region of the movable portion of the machine, from a numerical control unit side to the machine side.

According to the present invention, it is unnecessary to provide a dog or limit switch as in the prior art, thereby providing an advantage in terms of cost. Moreover, complicated tanks such as mounting and positional adjustments are no longer required.

Brief description of the drawings

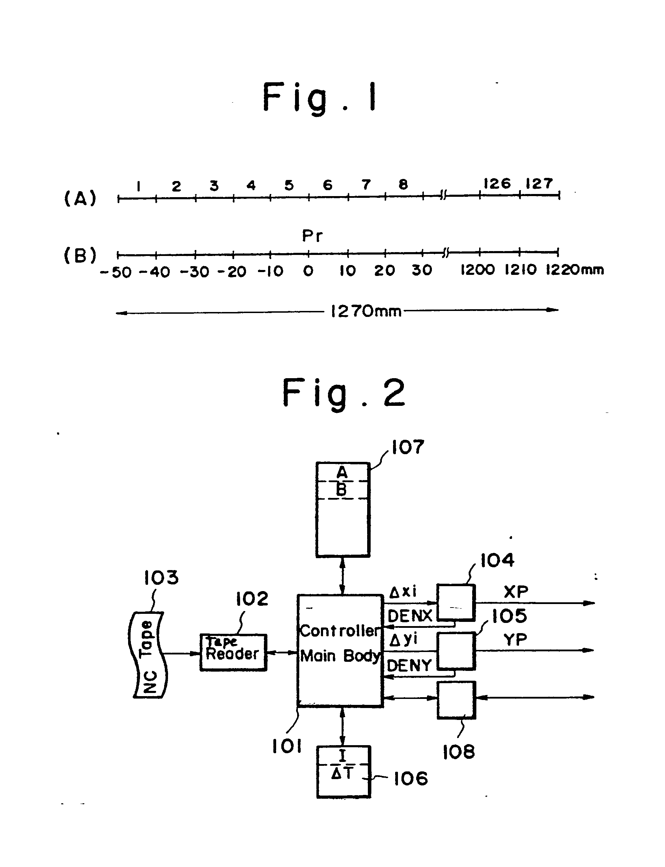

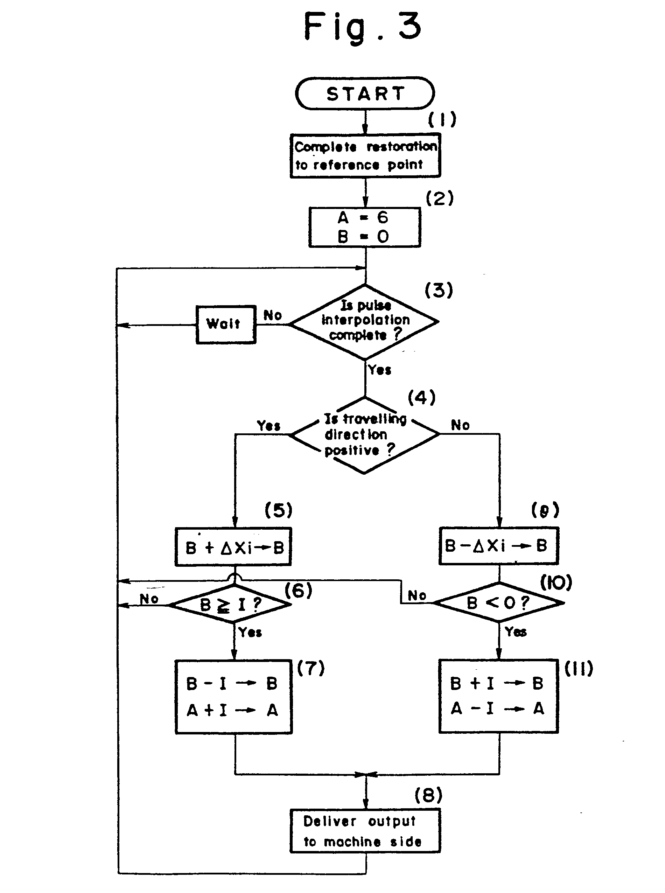

Fig. 1 is an illustrative view for describing regions, Fig. 2 is a block diagram illustrating an embodiment for carrying out the present invention, and Fig. 3 is a flowchart.

A particular method will now be described in detail with reference to the drawings to further clarify the present invention.

Fig. 1 is an illustrative view for a case where a full stroke of 1270 mm along a certain coordinate axis, e.g., the X axis, of a machine tool is equally divided into 127 regions. The stroke in the negative direction from a reference point Pr is 50 mm, and the stroke in the positive direction is 1220 mm. Regions are defined at 10 mm intervals. The region in the −50~−40 mm interval shall be a first region, that in the −40~−30 mm interval a second region, and so on through the region in the 1210~1220 mm interval, which shall be a 127th region.

Fig. 2 is a block diagram of an NC apparatus for practicing the method of discriminating a present position region of a machine according to the present invention. Fig. 3 is a flowchart illustrating the method.

A controller main body 101 controls a tape reader 102 to temporarily store the entirety of a machining program from an NC tape 103 in a RAM 107, after which the controller reads the machining program out of the RAM 107 block by block to perform numerical control processing. Specifically, if the NC data is path data, the travelling distance is Xi, Yi (incremental values) and the feed velocity is F, then the controller main body 101 performs the following operations:

$$\Delta Xi = Fx \cdot \Delta T \qquad (1)$$

$$\Delta Yi = Fy \cdot \Delta T \qquad (2)$$

to obtain travelling distances $\Delta Xi$, $\Delta Yi$ along the respective X and Y axes during a predetermined period of time $\Delta T$. These travelling distances are applied to pulse interpolators 104, 105, respectively. It should be noted that $\Delta T$ is a period of time preset as a parameter in a parameter memory 106, and that Fx, Fy are X- and Y-axis velocities, respectively, which are decided by the following equations:

$$Fx = F \cdot Xi \sqrt{Xi^2 + Yi^2} \qquad (3)$$

$$Fy = F \cdot Yi \sqrt{Xi^2 + Yi^2} \qquad (4)$$

When $\Delta Xi$, $\Delta Yi$ are applied to the pulse interpolators 104, 105, these perform pulse interpolation computations and apply interpolated pulses Xp, Yp to X- and Y-axis servo units, which are not shown, thereby rotating servomotors to transport a movable portion such as a table or tool along a commanded path. When the number Nx of interpolated pulses Xp along the X axis and the number Ny of interpolated pulses Yp along the Y axis become equal to $\Delta Xi$, $\Delta Yi$, respectively, namely when the following hold:

$$Nx = \Delta Xi \qquad (5)$$

$$Ny = \Delta Yi \qquad (6)$$

the pulse interpolators deliver pulse distribution end signals DENX, DENY to the control unit main body 101. As a result, the controller main body 101 integrates $\Delta Xi$, $\Delta Yi$ and determines whether or not the movable portion has arrived at a target position. If it has not, the controller computes subsequent items of travelling distance data $\Delta Xi+1$, $\Delta Yi+1$ from Eqs. (1) and (2) (actually, $\Delta Xi+1 = \Delta Xi$, $\Delta Yi+1 = \Delta Yi$), and applies these to the pulse interpolators 104, 105, respectively. This is followed by execution of similar processing. When the movable portion arrives at the target position along the commanded path, the controller main body 101 reads the next block of NC data out of the RAM 107 and executes NC processing on the basis of this NC data.

Meanwhile, as the NC processing is being executed, the controller main body 101, under the control of a control program, performs processing, illustrated below, for discriminating the present position region of a machine. This processing will be described with reference to the flowchart shown in Fig. 3. We will assume that the movable portion of the machine has been restored to the reference point Pr at the start of this processing by means of a well-known reference point return operation (step 1). In response to completion of the reference point return operation, a present position region number A stored in the RAM 107 shall be set to "6" (A=6), and a numerical value B indicating a position within the region shall be set to 0 (step 2). Though the following description shall be confined to the X axis, this in no way places a limitation upon the invention.

When path data or positioning data are read out of the RAM 107 and $\Delta Xi$ is delivered to the pulse interpolator 104, the latter performs a pulse interpolation operation (step 3). When this operation is carried out, the controller main body 101 executes the following process steps, depending upon the direction of travel:

(a) If the direction of travel is positive (+X direction) (step 4), then, upon completion of travel over the distance $\Delta Xi$ (DENX="1"), the following operation is performed (step 5):

$$B + \Delta Xi \rightarrow B$$

(b) B and a region interval l, which is stored in the parameter memory 106, are compared in terms of magnitude (step 6).

(c) If $B \geq l$ holds, the following operation is performed:

$$A + 1 \rightarrow A$$

to increment the region number, as well as the following operation:

$$B - l \rightarrow B$$

to obtain the position of the movable portion in the new region (step 7).

(d) The computed present position region number A is delivered to the machine side through a data input/output unit 108. If $B < l$ holds, the system waits for $\Delta Xi$ to be produced. When it is produced, steps 3 through 5 are repeated.

(e) Meanwhile, if the direction of travel is negative (−X direction), then the following operation is performed at the end of the interpolation for $\Delta Xi$ (step 9):

$$B - \Delta Xi \rightarrow B$$

(f) B and 0 are compared in magnitude.

(g) If $B < 0$ holds (step 10), then the following operation is performed:

$$A - 1 \rightarrow A$$

to count down the region number, as well as the following operation (step 11):

$$B + l \rightarrow B$$

to obtain the position of the movable portion in the new region.

(h) The computed present position region number A is delivered to the machine side through the data input/output unit 10B (step 8). If $B \geq 0$ holds, the system waits for $\Delta Xi$ to be produced. When it is produced, steps 3, 4, 9 and 10 are repeated.

Though the foregoing description relates solely to the X axis, the present invention is not limited thereby. Regions can be discriminated in similar fashion with regard to the Y and Z axes as well.

Industrial applicability

The present invention is not only well-suited for application to numerically controlled machine tools but can also be used in any arrangement such as an electric discharge machine or laser cutter that requires verification of the operating position of a movable machine element.

**Claims**

1. A method of providing a signal indicative of the current position of a movable portion of a machine which is controlled by a numerical control system in dependence on the current position of said movable portion, comprising dividing a stroke of said movable portion along a controlled coordinate axis into parts to partition the stroke into n regions, and detecting the current position of said movable portion along said axis in terms of said regions, characterised by:

dividing said stroke such that said regions are equal to one another in length and each is in contact with the next;

assigning consecutive present position region numbers to the successive partitioning regions;

integrating a commanded travelling distance of the movable portion of the machine as it moves along said regions;

when the integrated commanded travelling distance of the movable portion of the machine emerges from one of said regions, incrementing or decrementing the present position region number in dependence upon the travelling direction of the movable portion of the machine, thereby to indicate the next region as being the new present position region of the movable portion of the machine; and

delivering a present position region signal, which is indicative of said present position region of the movable portion of the machine, from a numerical control unit side to the machine side.

2. A method according to claim 1, when applied to each of a plurality of controlled coordinate axes of a machine.

**Patentansprüche**

1. Verfahren zum Bereitstellen eines Signals, das kennzeichnend für die augenblickliche Position eines beweglichen Teils einer Maschine ist, die durch ein numerisches Steuersystem in Abhängigkeit von der augenblicklichen Position des beweglichen Teils gesteuert wird, welches Verfahren das Unterteilen eines Bewegungsweges des beweglichen Teils längs einer kontrollierten Koordinatenachse in Teilwege zum Unterteilen des Bewegungsweges in n Bereiche und das Erfassen der augenblicklichen Position des beweglichen Teils längs der Achse im Sinne der Bereiche umfaßt, gekennzeichnet durch Schritte zum

Unterteilen des Bewegungsweges derart, daß die Bereiche einander in ihrer Länge gleich sind und jeder derselben mit dem jeweils nächsten in Berührung steht,

Zuweisen aufeinanderfolgender laufender Positions-Bereichsnummern den aufeinanderfolgenden Unterteilungs-Bereichen,

Integrieren einer befohlenen Bewegungsstrecke des beweglichen Teils der Maschine, wenn sich dieses entlang den Bereichen bewegt,

wenn die integrierte befohlene Bewegungsstrecke des beweglichen Teils der Maschine aus einem der Bereiche heraustritt, Erhöhen oder Erniedrigen der laufenden Positions-Bereichsnummer in Abhängigkeit von der Bewegungsrichtung des beweglichen Teils der Maschine, um dadurch den nächsten Bereich als den neuen gegenwärtigen Positions-Bereich des beweglichen Teils der Maschine zu bezeichnen, und

Ausgeben eines Augenblickspositions-Bereichssignals, das kennzeichnend für den gegenwärtigen Positions-Bereich des beweglichen Teils der Maschine ist, aus einer numerischen Steuereinheit an die Maschine.

2. Verfahren nach Anspruch 1, angewendet auf jede aus einer Vielzahl von kontrollierten Koordinatenachsen einer Maschine.

**Revendications**

1. Un procédé de création d'un signal indicatif de la position en cours d'une partie mobile d'une machine qui est commandée par un système de commande numérique en fonction de la position en cours de ladite partie mobile, comprenant les opérations consistant à diviser une course de ladite partie mobile le long d'un axe de coordonnée commandé, en parties, afin de diviser la course n régions, et à détecter la position en cours de ladite partie mobile le long dudit axe en termes desdites régions, caractérisé par les opérations consistant à:

diviser ladite course de façon telle que lesdites régions sont égales les unes aux autres en longueur et que chacune est en contact avec la suivante;

affecter des nombres consécutifs de régions de position en cours, aux régions à division successive;

intégrer une distance de trajet commandée de la partie mobile de la machine à mesure qu'elle se déplace le long desdites régions;

lorsque la distance de déplacement commandé intégré de la partie mobile de la machine sort de l'une desdites régions, incrémenter ou décrémenter le nombre de régions de position en cours en fonction de la direction de déplacement de la partie mobile de la machine en permettant d'indiquer la région suivante comme étant la nouvelle région de position en cours de la partie mobile de la machine; et

envoyer un signal de région de position en cours qui est indicatif de ladite région de position en cours de la partie mobile de la machine, à partir d'un côté d'unité de commande numérique vers le côté machine.

2. Un procédé selon la revendication 1, lorsque celui-ci est appliqué à chacun d'un ensemble d'axes de coordonnées commandés d'une machine.

# Fig . 1

(A) | 1 2 3 4 5 6 7 8 // 126 127

(B) Pr
-50 -40 -30 -20 -10 0 10 20 30 // 1200 1210 1220mm

←————————— 1270mm —————————→

# Fig . 2

# EP 0 127 684 B1

# Fig. 3

START

(1) Complete restoration to reference point

(2) A = 6, B = O

(3) Is pulse interpolation complete ?
— No → Wait
— Yes

(4) Is travelling direction positive ?
— Yes
— No

(5) $B + \Delta Xi \rightarrow B$

(9) $B - \Delta Xi \rightarrow B$

(6) $B \gtrless I$ ?
— No
— Yes

(10) $B < 0$ ?
— No
— Yes

(7) $B - I \rightarrow B$, $A + I \rightarrow A$

(11) $B + I \rightarrow B$, $A - I \rightarrow A$

(8) Deliver output to machine side

2